# EUROPÄISCHE PATENTSCHRIFT

(11) **EP 0 481 399 B1**
(45) Veröffentlichungstag und Bekanntmachung des Hinweises auf die Patenterteilung: **01.06.1994**
(21) Anmeldenummer: 91117481.1
(22) Anmeldetag: 14.10.1991
(51) Int. Cl.: A01F 15/07

(54) **Bindevorrichtung für die Ballen einer Ballenpresse**
Wrapping device for bales in a bales press
Dispositif pour envelopper des balles dans une presse à balles

(30) Priorität: 16.10.1990 DE 4032763
(43) Veröffentlichungstag der Anmeldung: 22.04.1992
(73) Patentinhaber: DEERE & COMPANY, Moline, Illinois 61265 (US)
(72) Erfinder: Viaud, Jean, F-57200 Sarreguemines (FR)
(74) Vertreter: Feldmann, Bernhard

(56) Entgegenhaltungen:
- EP-A- 0 331 653
- DE-U- 8 321 610
- US-A- 4 956 960

## Beschreibung

Die Erfindung betrifft eine Bindevorrichtung für die Ballen einer Ballenpresse mit einer drehbaren Rolle, auf der das Bindematerial gelagert ist.

In Ballenpressen zu Ballen geformtes Material, insbesondere Erntegut (wie Heu, Stroh) oder Industriematerial (Papier, Baumwolle, Lumpen oder dergleichen), wird nach dem Preßvorgang mit Bindematerial umgeben und gebunden, damit es die in dem Preßraum aufgedrängte Form bewahrt und für die weitere Handhabung kompakt bleibt. Bei dem Bindematerial kann es sich um Garn, Folie, Kunststoffnetz, Papier oder ähnliches handeln, das auf eine Rolle aufgewickelt in die Bindevorrichtung eingelegt wird.

So ist es bei einer Rundballenpresse (US-A-4,366,665) bekannt, auf einer Rolle aufgewickelte Folie auf einem Träger bevorratet zu halten. Die Folie wird bei Bedarf über eine Fördervorrichtung einem Preßraum zugeführt, in dem sie mit dem Preßgut bewegt wird und dabei dessen Umfang umhüllt. Nachdem mindestens eine Lage um das Preßgut gelegt ist, wird das Bindematerial von der Rolle mittels einer Trennvorrichtung abgeschnitten. Um zu vermeiden, daß sich die Rolle aufgrund der ihr aufgegebenen Drehenergie weiter dreht und Bindematerial abwickelt, das nicht abgenommen wird, ist eine Bremseinrichtung mit einer Bremsscheibe, Federn und Bremsbelägen vorgesehen, die der Drehbewegung der Rolle entgegenwirkt.

Die Zurverfügungstellung der separaten Bremseinrichtung wird als nachteilig empfunden, weil sie zusätzliche Kosten verursacht.

Aus der US-A-4,956,960 ist eine Netzbindevorrichtung bekannt gemäß dem Oberbegriff des Anspruchs 1, bei der eine Netzrolle in einen vertikal schwenkbaren Aufnehmer gelegt und über diesen in einen Netzkasten befördert wird. Der Aufnehmer enthält zwei über einen Griff miteinander verbundene Arme, die jeweils zu einem Halbkreis gebogen sind. Sobald sich die Netzrolle in dem Netzkasten befindet, löst sie sich von dem Aufnehmer, der dann funktionslos wird. Innerhalb des Netzkastens liegt die Netzrolle mit einem Teil ihrer Umfangsfläche an einer Rückwand einer Rundballenpresse an und auf einem gekrümmten Bodenblech, das einen Keil mit der Rückwand bildet, auf.

Die EP-A-0 331 653 offenbart in ihrer Figur 5 eine Rolle, die von vertikal schwenkbaren Armen ständig getragen und an einer Reibfläche zur Anlage gebracht wird. Diese Rolle enthält mehrlagiges perforiertes Papier, insbesondere Toilettenpapier.

Die der Erfindung zugrunde liegende Aufgabe wird darin gesehen, das Nachlaufen der Rolle ohne die Verwendung einer separaten Bremseinrichtung und speziell geformter Blechteile zu vermeiden.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise übt die Rolle selbst aufgrund ihres Gewichts bei der Anlage an die Fläche im Maß ihres auf die Fläche gerichteten Vektors eine Reibkraft aus, die ausreicht, ein Nachlaufen zu verhindern. Unter Rolle sind insbesondere die Windungen des Bindematerials auf einem Träger zu verstehen; demnach kommt in erster Linie eine Berührung des Bindematerials selbst mit der Fläche in Betracht. Alternativ hierzu kann auch der Träger an seinen axialen Enden mit Scheiben versehen sein, die an der Fläche reiben. Darüber hinaus kann der Durchmesser der Scheiben geringer sein als der maximale Durchmesser der Rolle mit dem aufgewickelten Bindematerial, so daß anfangs das Bindematerial mit einem ersten Reibkoeffizienten und nach Abzug einer bestimmten Menge des Bindematerials die Scheiben des Trägers mit einem zweiten Reibkoeffizienten an der Fläche reiben. Jedenfalls führt die Schwenkbarkeit der Arme dazu, daß die Rolle stets aufgrund ihres eigenen Gewichts die Reibkraft aufbaut und eine separate Bremsvorrichtung nicht erforderlich ist.

Die Reibkraft der Rolle, d. h. des Bindematerials und/oder des Trägers, kann an das maximale Gewicht der Rolle, die unter den einzelnen Maschinengrößen und -typen unterschiedlich sein kann, angepaßt werden, indem das Reibverhalten der Fläche geändert wird. Hierzu können Beläge mit unterschiedlichen Reibkoeffizienten verwendet werden. Das gleiche Ziel wird erreicht durch eine Veränderung der Form der Oberfläche der Fläche, so daß sich nicht der Reibkoeffizient, sondern die Größe der Reibfläche ändert. Dies kann durch eine andere Struktur in der Oberfläche, z. B. wellenförmig, wabenförmig, geriffelt oder dergleichen, geschehen; oder die Fläche ist gewölbt, und es findet mehr und mehr eine Anpassung der Außenform der Rolle an die Krümmung der Fläche statt.

Die Reibkraft kann auf einfache Weise auch dadurch geändert werden, daß der Anlagedruck der Rolle an die Fläche über den Schwenkweg unterschiedlich gestaltet wird, indem eine zusätzliche Kraft eingeleitet wird. Eine derartige zusätzliche Kraft kann einem Kraftspeicher in der Form einer Zug- oder Druckfeder, eines Pneumatik-Kolben-Zylinder-Zusammenbaus oder eines zusätzlichen Gewichts entnommen werden. Je nachdem, ob dem anfänglichen Gewicht der Rolle mit dem gesamten Bindematerial entgegengewirkt oder dessen Gewichtskraft eine zusätzliche Kraft hinzugefügt werden soll, ist der Kraftspeicher entsprechend anzubringen. Soll der Kraftspeicher anfänglich die durch die Rolle aufgebrachte Reibkraft reduzieren und zum Ende hin erhöhen, sollte der Kraftspeicher so angebracht sein, daß er eine Totgangstellung überschreitet, zu deren beiden Seiten er aktiv werden kann. Die Totgangstellung wird dann erreicht, wenn der Lagerpunkt und der Angriffspunkt des Kraftspeichers an dem Arm sowie der Schwenkpunkt des Arms auf einer Linie liegen.

Auf eine andere Weise läßt sich eine Erhöhung der Reibkraft als Ausgleich für das sich verringernde Gewicht der Rolle dadurch hervorrufen, daß sich die Lage des Kraftspeichers infolge der Schwenkbewegung der Arme verändert und sich somit das Verhältnis der Vektoren der Gewichtskraft und der auf die Fläche wirkenden Kraft ändert. In gleicher Weise könnte die Spannung des Kraftspeichers durch eine von außen aufgebrachte Längenveränderung oder eine Druckänderung geändert werden.

In der Zeichnung ist ein nachfolgend näher beschriebenes Ausführungsbeispiel der Erfindung dargestellt. Es zeigt:
- Fig. 1: eine Ballenpresse mit einer Bindevorrichtung in Seitenansicht und in schematischer Darstellung und
- Fig. 2: die Bindevorrichtung in Seitenansicht.

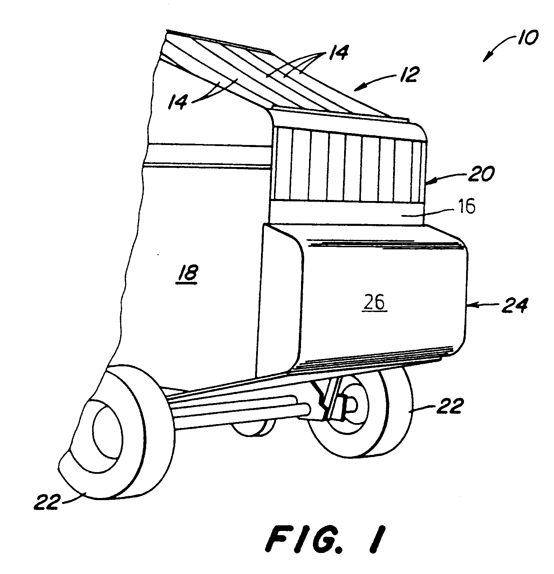

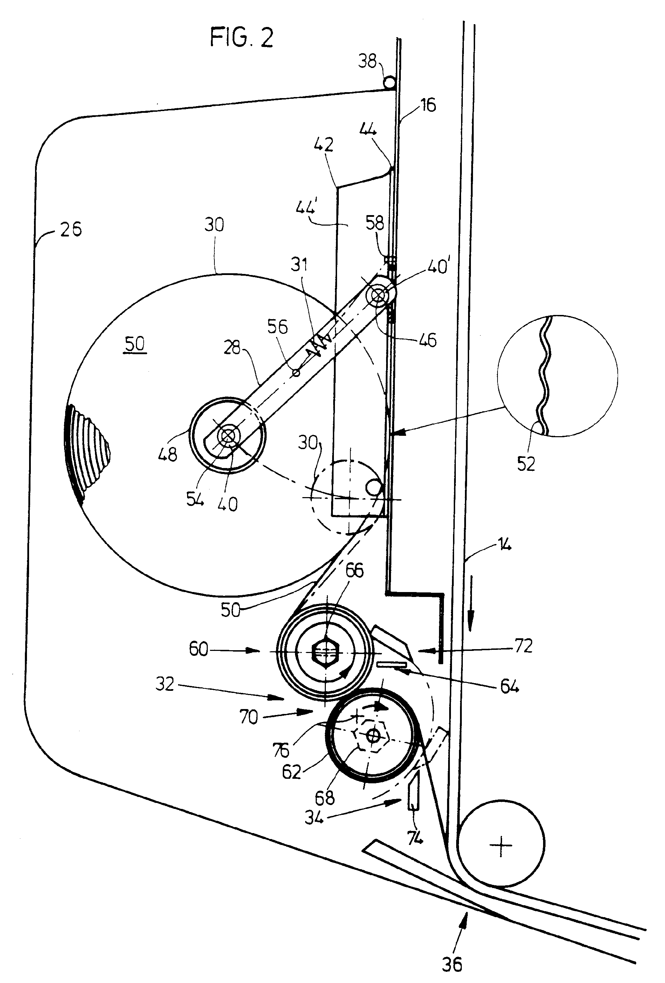

Eine Ballenpresse 10 in der Art einer Rundballenpresse bildet in ihrem Inneren einen Preßraum 12, der außer an seinen Stirnflächen von Riemen 14 begrenzt wird. Auf der rückwärtigen und in Figur 1 rechts gelegenen Seite werden die Riemen 14 von einer aufgehenden Wand 16 bedeckt, während der Preßraum 12 seitlich von Wänden 18 und 20 geschlossen wird. Die Ballenpresse 10 stützt sich auf Rädern 22 beweglich auf dem Boden ab und trägt an ihrer Rückseite angrenzend an die Wand 16 eine Bindevorrichtung 24, deren Einzelteile in Figur 2 dargestellt sind.

Eine derartige Ballenpresse 10 wird dazu benutzt, auf dem Boden liegendes Erntegut aufzunehmen und es zu Ballen zu pressen, um das Erntegut für eine weitere Verwendung handhabbar zu machen. Nachdem das Erntegut in dem Preßraum 12 verdichtet worden ist, wird es gebunden und auf dem Boden abgelegt. Die Ausbildung der Ballenpresse 10 als eine bewegliche Rundballenpresse stellt nur eine mögliche Variante dar; die Ballenpresse 10 könnte auch quaderförmige Ballen erzeugen, und anstatt des Ernteguts könnte auch Industriematerial wie Papier, Lumpen, Baumwolle, Holzwolle oder dergleichen gebunden werden - in diesen Fällen könnte die Ballenpresse 10 auch stationär betrieben werden.

Hinsichtlich des Preßraums 12, der Riemen 14, der Wände 16 bis 20 und der Räder 24 kann auf herkömmliche Ballenpressen 10 verwiesen werden; nähere Ausführungen hierzu erübrigen sich.

Die Bindevorrichtung 24, wie sie für dieses Ausführungsbeispiel in Figur 2 zu sehen ist, wird von einem Kasten 26 umgeben und enthält jedenfalls Arme 28, eine Rolle 30, einen Kraftspeicher 31, eine Fördervorrichtung 32, eine Trennvorrichtung 34 und eine Führungsbahn 36.

Der Kasten 26 ist in einem Gelenk 38 vertikal schwenkbar an der Wand 16 befestigt und schützt die gesamte Bindevorrichtung 24 vor Schmutz und äußeren Einflüssen.

Die Arme 28 sind aus Profilmaterial geformt und nehmen eine Länge ein, die den größtmöglichen Radius der Rolle 30 um ca. ein Viertel überschreitet. Beidenends sind die Arme 28 mit Lagern 40, 40′ versehen, die eine schwenkbewegliche Befestigung der Arme 28 ermöglichen. Das Lager 40 erlaubt die drehbewegliche Aufnahme der Rolle 30. Zur Anlenkung der Arme 28 an der Wand 16 ist ein Winkelstahl 42 vorgesehen, dessen einer Schenkel 44 an der Wand 16 befestigt ist und dessen anderer Schenkel 44′ zur Aufnahme des Lagers 40′ ausgebildet ist; hierzu erstreckt sich ein Lagerbolzen 46 senkrecht zu der Zeichenebene von dem Schenkel 42˝ weg. Es ist somit zu erkennen, daß die Arme 28 in der Zeichenebene um die Lagerbolzen 46 schwenken können.

Die Rolle 30 setzt sich in diesem Fall aus einem Träger 48 und Bindematerial 50 zusammen und kommt mit einem Teilbereich ihrer Umfangsfläche an der Wand 16 auf einer Fläche 52 zur Anlage. Figur 2 zeigt die Rolle 30 in ihren beiden Endstellungen und mit ihren dazugehörigen Außendurchmessern.

Der Träger 48 kann aus einem Rohr aus Pappe, Kunststoff oder Metall bestehen, an dessen Enden Zapfen 52 zum Einsatz in die Lager 40 angebracht sind.

Das Bindematerial 50 ist auf den Träger 48 aufgewickelt und wird dazu benutzt, den in dem Preßraum 12 gebildeten Ballen zu binden. Als Bindematerial 50 kommt Folie, Netz, Garn, Papier oder dergleichen in Betracht, wie dies bekannt ist. Während das Bindematerial 50 durch die Führungsbahn 36 dem Preßraum 12 zugeleitet und dort von dem Ballen mitgenommen wird, dreht sich die Rolle 30 mit den Zapfen 54 des Trägers 48 in den Lagern 40 und nimmt mit ihrem Außendurchmesser stetig ab. Infolge der Außendurchmesserverringerung nimmt der Abstand zwischen der Drehachse der Rolle 30 und der Wand 16 ab, und die Rolle 30 schwenkt mit den Armen 28 um die Lagerbolzen 46, um auf der Fläche 52 an der Wand 16 zur Anlage zu kommen.

Die Fläche 52 kann eben wie ein lackiertes Blech ausgebildet sein. Die Fläche 52 kann aber auch mit einem Belag aus Gummi oder dergleichen beschichtet sein, der einen hohen Reibungskoeffizienten hat. Alternativ hierzu kann die Fläche 52 auch wellenförmig ausgestaltet sein, wie dies in einer Darstellung rechts von den Riemen 14 in Figur 2 zu sehen ist; diese Darstellung ist um den Faktor 2 vergrößert. Schließlich kann die Fläche 52 mit unterschiedlichen Belägen versehen sein, die abhängig von der sich ändernden Lage der Rolle 30 mit dieser in Berührung kommen. Es ist Figur 2 zu entnehmen, daß der Angriffsbereich der Rolle 30 an der Fläche 52 nach unten wandert, wenn sich ihr Außendurchmesser verringert. Demnach kann ein Reibbelag mit einem höheren Reibungskoeffizienten an einer tiefer gelegenen Stelle der Fläche 52 die sich verringernde Reibkraft, die von dem Gewicht der Rolle 30 herrührt, ausgleichen.

Der Kraftspeicher 31 wird in diesem Ausführungsbeispiel von mechanischen Zugfedern gebildet, die einenends, nämlich an den Armen 28, an einen Stift 56 und anderenends, nämlich an dem Winkelstahl 42, an einen Stift 58 angehängt sind. Die Lage der Stifte 56, 58 ist so gewählt, daß diese mit dem Lagerbolzen 46 auf einer Linie liegen, wenn sich die Rolle 30 zwischen ihrer am weitesten links und ihrer am weitesten rechts gelegenen Stellung befindet. In dieser Zwischenstellung, die auch eine Totgangstellung darstellt, wird der Kraftspeicher 31 am meisten gespannt und kann diese Spannung beim Überwinden der Zwischenstellung auf jeder Seite abgeben, indem er die Arme 28 mit der Rolle 30 um die Lagerbolzen 46 schwenkt. Je weiter die Arme 28 über die Zwischenstellung hinaus bewegt werden, desto größer wird der Abstand einer gedachten Linie zwischen den Stiften 56, 58 und dem Mittelpunkt des Lagerbolzens 42 und somit der des Hebelarms, über den der Kraftspeicher 31 auf die Arme 28 wirken kann.

Es ist ersichtlich, daß sich nach dem Überschreiten der Zwischenstellung in einer Bewegung entgegen dem Uhrzeigerdrehsinn der Kraftspeicher 31 zu verkürzen sucht und dabei die Rolle 30 bzw. das auf ihr aufgewickelte Bindematerial an die Fläche 52 anpreßt. Nach dem Überschreiten der Zwischenstellung in einer Bewegung im Uhrzeigerdrehsinn verkürzt sich der Kraftspeicher 31 zwar ebenfalls - er hebt dabei aber die Rolle 30 an und verringert dabei den Anlagedruck des Bindematerials 50 auf die Fläche 52. Demnach wird ein Ausgleich für die zu beiden Seiten der Zwischenstellung unterschiedliche Reibkraft aufgrund des Gewichts der Rolle 30 durch den Kraftspeicher 31 geschaffen.

Die Fördervorrichtung 32 wird in diesem Ausführungsbeispiel von einer oberen und einer unteren Walze 60 und 62, zwischen denen das Bindematerial 50 hindurch geführt wird, und einem Leitblech 64 gebildet.

Die obere Walze 60 ist auf ihrem Außenumfang gummibeschichtet und weist somit einen hohen Reibungskoeffizienten auf ihrer Umfangsfläche auf. Die obere Walze 60 wird in der Richtung des gezeigten Pfeils von einer nicht gezeigten Antriebseinrichtung angetrieben, wie dies bekannt ist; hierzu ist sie auf einer Welle 66 drehfest gelagert.

Die untere Walze 62 ist ebenfalls auf einer Welle 68 drehbar in den Wänden 18 gelagert und wird normalerweise nicht angetrieben, sondern läuft aufgrund der Reibung, die die obere Walze 60 auf sie ausübt, mit. Die Umfangsfläche der unteren Walze 62 ist nahezu auf ihrer gesamten Fläche glatt, so daß die untere Walze 62 aus Metall oder einem harten Kunststoff gebildet sein kann. Wahlweise kann diese untere Walze 62 aber auch angetrieben werden, und zwar mit einer höheren Umfangsgeschwindigkeit als die obere Walze 60. Schließlich sind in die axialen Endbereiche der unteren Walze 62 nicht gezeigte spiralförmige Nuten eingearbeitet, die eine Streckung des Bindematerials 50 zu den axialen Enden der Walzen 60, 62 während deren Drehbewegung bewirken.

Beide Walzen 60, 62 definieren zwischen sich einen Durchlaß 70, durch den das Bindematerial 50 geführt wird.

Die Anordnung der Walzen 60, 62 ist so gewählt, daß eine durch den Durchlaß 70 verlaufende und beiden Walzen 60, 62 gemeinsame Tangentiale im wesentlichen senkrecht zu der Haupterstreckungsebene der Riemen 14 verläuft oder gar zu den Riemen 14 hin schräg nach oben verläuft. Die Nähe der Walzen 60, 62 zu der Hauptfläche der Riemen 14 ist so gewählt, daß das Bindematerial 50 mühelos und unmittelbar nach dem Verlassen des Durchlasses 70 in Kontakt mit den Riemen 14 gerät und von diesen mitgerissen wird, sobald es von den in Drehung versetzten Walzen 60, 62 von dem Träger 48 abgezogen wird. Wird die untere Walze 60 mit einer höheren Umfangsgeschwindigkeit angetrieben als die obere Walze 60, wird das Bindematerial 50 aufgrund der Geschwindigkeitsdifferenz nach oben von der Tangentialen weg bewegt.

Das Leitblech 64 ist oberhalb der durch den Durchlaß 70 verlaufenden Tangentialen und zu dieser ungefähr parallel angeordnet, wobei seine Leitfläche ungefähr senkrecht auf der Haupterstreckungsebene der Riemen 14 in deren angrenzenden Bereich verläuft. Auf diese Weise gleitet das Bindematerial 50 nach dem Verlassen des Durchlasses 70 an der Unterseite des Leitblechs 64 entlang, wird so zu den Riemen 14 geführt und kommt mit diesen schließlich in Berührung. Aus dem Stand der Technik bekannte Vorrichtungen zum Anlegen des Bindematerials 50 an die Riemen 14 mittels Druckluft oder sonstiger mechanischer Mittel sind somit nicht erforderlich, da das Bindematerial 50 von den Walzen 60, 62 selbst an die Riemen 14 zur Anlage gebracht wird.

Die Trennvorrichtung 34 enthält ein Messer 72 und ein Gegenmesser 74 und dient dazu, das um den Ballen gewundene Bindematerial 50 von dem auf dem Träger 30 verbleibenden Bindematerial 50 zu trennen, sobald der Ballen ausreichend fest gebunden ist. Die Trennvorrichtung 34 befindet sich in unmittelbarer Nachbarschaft zu der Fördervorrichtung 32 und wird entweder manuell oder automatisch bedient. Die Länge und die Haupterstreckungsrichtung des Messers 72 und des Gegenmessers 72 entsprechen denen der Walzen 60 und 62.

Das Messer 72 ist als Leiste mit einer im unteren Bereich angefasten Schnittkante 72′ ausgebildet und auf einem nicht gezeigten schwenkbaren Träger um einen Schwenkpunkt 76 beweglich geführt. Diese Bewegung vollzieht sich in dem Raum zwischen den Walzen 60 und 62 und den Riemen 14. Während der Bewegung kreuzt das Messer 72 das Bindematerial 50, das sich bis zu den Riemen 14 erstreckt, und erfaßt dieses. In diesem bevorzugten Ausführungsbeispiel nimmt das Messer 72 eine Ruhestellung oberhalb des Durchlasses 70 und in der Nähe der oberen Walze 60 ein und bewegt sich in eine Trennstellung, die unterhalb des Durchlasses 70 im unteren Bereich der unteren Walze 62 liegt.

Das Gegenmesser 74 ist stationär und auf nicht gezeigte Weise an den Wänden 16 bis 20 befestigt. Es weist ebenfalls die Form einer angefasten Leiste auf, wobei die Schnittkante 74′ oben und dem Messer 72 zugelegen angeordnet ist. Während des Schneid-, Scher- oder Trennvorgangs streifen die beiden Schnittkanten 72′ und 74′ aneinander entlang.

Der Trennvorgang des Bindematerials 50 vollzieht sich nach dem Vorbeschriebenen wie folgt.

Auf ein manuelles oder automatisches Signal hin bewegt sich das Messer 72 auf seinem Träger auf einem um den Schwenkpunkt 76 verlaufenden Kreisbogen von der Ruhestellung aus nach unten zur Trennstellung. Während dieser Bewegung trifft das Messer 62 kurz vor dem Erreichen des Gegenmessers 74 auf das sich zu den Riemen 14 erstreckende und um die untere Walze 62 gespannte Bindematerial 50, das von dem in dem Preßraum 12 drehenden Ballen in die Führungsbahn 36 gezogen wird. Das Bindematerial 50 wird im weiteren Verlauf an das Gegenmesser 74 herangeführt und zwischen den beiden Schnittkanten 72′ und 74′ abgeschert. Der abgeschnittene Teil des Bindematerials 50 wird von dem Ballen in den Preßraum 12 gezogen und dort vollends um den Ballen gewickelt. Nach dem Trennvorgang wird auf das auf der Rolle 30 aufgewickelte Bindematerial 50 kein Zug mehr ausgeübt, und die obere Walze 60 wird nicht mehr angetrieben. Demnach ist der Abzug des Bindematerials 50 von der Rolle 30 unmittelbar nach dem Trennvorgang beendet. Insbesondere wird die Rolle 30 aufgrund ihrer Anlage an der Fläche 52 an einem Nachlaufen gehindert.

## Patentansprüche

1. Bindevorrichtung (24) für die Ballen einer Ballenpresse (10) mit einer Bindematerial (50) enthaltenden drehbaren Rolle (30), die an einer Fläche (52) der Ballenpresse (10) anliegt, gekennzeichnet durch Arme (28), die
a) einerseits die Rolle (30) drehbar aufnehmen,
b) andererseits oberhalb der Drehachse der Rolle (30) an der Fläche (52) in vertikaler Richtung schwenkbar angelenkt sind, so daß sie die Rolle (30) stets an der Fläche (52) zur Anlage bringen.

2. Bindevorrichtung nach Anspruch 1, dadurch gekennzeichnet, daß die Fläche (52) zur Erzeugung einer im voraus bestimmten Reibkraft einen Belag mit einem entsprechenden Reibungskoeffizienten trägt.

3. Bindevorrichtung nach Anspruch 1 oder 2, dadurch gekennzeichnet, daß die Fläche (52) zur Erzeugung einer im voraus bestimmten Reibkraft eine Form aufweist, die bei sich änderndem Durchmesser der Rolle (30) eine gleichbleibende oder sich vergrößernde Reibfläche ergibt.

4. Bindevorrichtung nach einem oder mehreren der vorherigen Ansprüche, dadurch gekennzeichnet, daß an den Armen (28) mindestens ein Kraftspeicher (31) angreift, der eine die Gewichtskraft der Rolle (30) mindernde Wirkung entfaltet.

5. Bindevorrichtung nach einem oder mehreren der Ansprüche 1 bis 3, dadurch gekennzeichnet, daß an den Armen (28) mindestens ein Kraftspeicher (31) angreift, der eine die Gewichtskraft der Rolle (30) unterstützende Wirkung entfaltet.

6. Bindevorrichtung nach einem oder mehreren der vorherigen Ansprüche, dadurch gekennzeichnet, daß an den Armen (28) mindestens ein Kraftspeicher (31) angreift, der mit wenigstens einem Arm (28) um ein separates Lager (40′) zwischen zwei Endstellungen schwenkt und beim Übergang zwischen beiden Stellungen eine Stellung maximaler Spannung überschreitet.

7. Bindevorrichtung nach einem oder mehreren der vorherigen Ansprüche, dadurch gekennzeichnet, daß an den Armen (28) mindestens ein Kraftspeicher (31) angreift, dessen Spannkraft veränderbar ist und in Abhängigkeit von dem Gewicht bzw. dem Umfang der Rolle (30) verändert wird.

8. Bindevorrichtung nach einem oder mehreren der vorherigen Ansprüche, dadurch gekennzeichnet, daß das Bindematerial (50) auf einen Träger (48) aufgewickelt ist und der Träger (48) an der Fläche (52) zur Anlage bringbar ist.

9. Bindevorrichtung nach einem oder mehreren der vorherigen Ansprüche, dadurch gekennzeichnet, daß das Bindematerial (50) auf einen Träger (48) aufgewickelt ist und das Bindematerial (50) an der Fläche (52) zur Anlage bringbar ist.

10. Bindevorrichtung nach einem oder mehreren der vorherigen Ansprüche, dadurch gekennzeichnet, daß das Bindematerial (50) auf einen Träger (48) aufgewickelt ist und das Bindematerial (50) an der Fläche (52) während eines ersten Teils des Schwenkwegs der Arme (28) und der Träger (48) während eines zweiten Teils des Schwenkwegs der Arme (28) zur Anlage bringbar ist.

## Claims

1. Binding device (24) for the bales of a bale press (10) with a rotatable roller (30) which contains binding material (50) and which contacts a surface (52) of the bale press, characterised by arms (28) which
a) on the one hand receive the roller (30) rotatably,
b) on the other hand are coupled to the surface (52) above the pivot axis of the roller (30) so as to be capable of pivoting in a vertical direction, so that they always bring the roller (30) into contact with the surface (52).

2. Binding device according to claim 1, characterised in that the surface (52) for producing a predetermined frictional force bears a covering with a corresponding coefficient of friction.

3. Binding device according to claim 1 or 2, characterised in that the surface (52) for producing a predetermined frictional force has a shape which with varying diameter of the roller (30) yields a constant or increasing friction surface area.

4. Binding device according to one or more of the preceding claims, characterised in that the arms (28) are engaged by at least one energy storing device (31) which develops an action reducing the weight of the roller (30).

5. Binding device according to one or more of claims 1 to 3, characterised in that the arms (28) are engaged by at least one energy storing device (31) which develops an action supporting the weight of the roller (30).

6. Binding device according to one or more of the preceding claims, characterised in that the arms (28) are engaged by at least one energy storing device (31) which with at least one arm (28) pivots about a separate bearing (40′) between two end positions and on changing between the two positions traverses a position of maximum tension.

7. Binding device according to one or more of the preceding claims, characterised in that the arms (28) are engaged by at least one energy storing device (31) of which the tensioning force is variable and is varied as a function of the weight or circumference of the roller (30).

8. Binding device according to one or more of the preceding claims, characterised in that the binding material (50) is wound onto a support (48) and the support (48) can be brought into contact with the surface (52).

9. Binding device according to one or more of the preceding claims, characterised in that the binding material (50) is wound onto a support (48) and the binding material (50) can be brought into contact with the surface (52).

10. Binding device according to one or more of the preceding claims, characterised in that the binding material (50) is wound onto a support (48) and the binding material (50) can be brought into contact with the surface (52) during a first part of the pivot path of the arms (28) and the support (48) can be brought into contact with the surface (52) during a second part of the pivot path of the arms (28).

## Revendications

1. Dispositif de liage (24) pour les balles d'une presse à balles (10), avec une bobine rotative (30) qui contient un matériau de liage (50) et s'applique contre une surface (52) de la presse à balles, **caractérisé** par des bras (28) qui
a) reçoivent à rotation la bobine (30) à leurs premières extrémités,
b) sont articulés, à leurs autres extrémités, à pivotement en direction verticale à la surface (52) au-dessus de l'axe de rotation de la bobine (30), de sorte qu'ils amènent en permanence la bobine (30) en application contre la surface (52).

2. Dispositif de liage selon la revendication 1, **caractérisé** en ce qu'afin de produire une force de friction déterminée à l'avance, la surface (52) porte un revêtement possédant un coefficient de friction correspondant.

3. Dispositif de liage selon la revendication 1 ou 2, **caractérisé** en ce qu'afin de produire une force de friction déterminée à l'avance, la surface (52) présente une forme qui procure une surface de friction restant constante ou augmentant avec la modification du diamètre de la bobine (30).

4. Dispositif de liage selon l'une quelconque des revendications précédentes, **caractérisé** en ce qu'au moins un accumulateur d'énergie (31) agit sur les bras (28), qui développe une action diminuant la force due au poids de la bobine (30).

5. Dispositif de liage selon l'une quelconque des revendications 1 à 3, **caractérisé** en ce qu'au moins un accumulateur d'énergie (31) agit sur les bras (28), qui développe une action assistant la force due au poids de la bobine (30).

6. Dispositif de liage selon l'une quelconque des revendications précédentes, **caractérisé** en ce qu'au moins un accumulateur d'énergie (31) agit sur les bras (28) qui, avec au moins un bras (28), pivote autour d'un palier séparé (40′) entre deux positions finales et dépasse une position de tension maximale lors du passage entre ces deux positions.

7. Dispositif de liage selon l'une quelconque des revendications précédentes, **caractérisé** en ce qu'au moins un accumulateur d'énergie (31) agit sur les bras (28), dont la force de tension est modifiable, et est modifiée en fonction du poids ou encore de la circonférence de la bobine (30).

8. Dispositif de liage selon l'une quelconque des revendications précédentes, **caractérisé** en ce que le matériau de liage (50) est enroulé sur un élément porteur (48) et l'élément porteur (48) peut être amené en application contre la surface (52).

9. Dispositif de liage selon l'une quelconque des revendications précédentes, **caractérisé** en ce que le matériau de liage (50) est enroulé sur un élément porteur (48) et le matériau de liage (50) peut être amené en application contre la surface (52).

10. Dispositif de liage selon l'une quelconque des revendications précédentes, **caractérisé** en ce que le matériau de liage (50) est enroulé sur un élément porteur (48) et le matériau de liage (50) peut être amené en application contre la surface (52) pendant une première partie de la course de pivotement des bras (28), tandis que l'élément porteur (48) peut être amené en application contre la surface (52) pendant une seconde partie de la course de pivotement des bras (28).
